## Europäisches Patentamt

## European Patent Office

## Office européen des brevets

(19)

(11) Numéro de publication: **0 064 920**
**B1**

(12)

# FASCICULE DE BREVET EUROPEEN

(45) Date de publication du fascicule du brevet:
**02.11.83**

(51) Int. Cl.³: **F 22 B 1/06**, G 21 C 1/02

(21) Numéro de dépôt: **82400790.0**

(22) Date de dépôt: **30.04.82**

(54) **Dispositif de production de vapeur et de prélèvement de chaleur dans un réacteur nucléaire à neutrons rapides.**

(30) Priorité: **30.04.81 FR 8108637**
**30.07.81 FR 8114897**

(43) Date de publication de la demande:
**17.11.82 Bulletin 82/46**

(45) Mention de la délivrance du brevet:
**02.11.83 Bulletin 83/44**

(84) Etats contractants désignés:
**BE DE FR GB IT NL**

(56) Documents cités:
**FR - A - 1 501 741**
**FR - A - 2 246 942**
**FR - A - 2 346 816**
**FR - A - 2 390 810**
**US - A - 3 888 212**
**US - A - 3 924 675**

(73) Titulaire: **NOVATOME, 20 Avenue Edouard Herriot, F-92350 Le Plessis Robinson (FR)**

(72) Inventeur: **Debru, Michel, 3 Square Jean Boin, F-91300 Massy (FR)**
Inventeur: **Malaval, Claude, 115bis av. du Bois de Verrière, F-92160 Antony (FR)**
Inventeur: **Lefevre, Jean-Claude, 29 Résidence Le Bois du Roi, F-91940 Les Ulis (FR)**

(74) Mandataire: **Bouget, Lucien et al, CREUSOT-LOIRE 15 rue Pasquier, F-75383 Paris Cedex 08 (FR)**

## Dispositif de production de vapeur et de prélèvement de chaleur dans un réacteur nucléaire à neutrons rapides

L'invention concerne un dispositif de production de vapeur et de prélèvement de chaleur dans un réacteur nucléaire à neutrons rapides.

Les réacteurs nucléaires à neutrons rapides de type intégré comportent une cuve de grande dimension renfermant un liquide de refroidissement qui peut être du sodium liquide dans lequel est plongé le cœur du réacteur. Le sodium liquide mis en circulation dans la cuve par des pompes constitue le fluide d'échange primaire du réacteur.

Dans ce fluide primaire sont également disposés des échangeurs de chaleur, appelés «échangeurs intermédiaires» qui réalisent un échange de chaleur entre le fluide primaire échauffé au contact du cœur et un fluide secondaire, généralement du sodium liquide également, circulant à l'intérieur des échangeurs intermédiaires. Les pompes de circulation du fluide primaire, également intégrées dans la cuve du réacteur, ont donc pour rôle de transporter le fluide primaire entre le cœur et les échangeurs intermédiaires.

A son tour, le sodium secondaire chauffé dans les échangeurs intermédiaires est amené à un générateur de vapeur où s'effectue le transfert thermique entre le sodium secondaire et de l'eau qui est ainsi vaporisée. Les échangeurs intermédiaires sont disposés sur des circuits ou boucles intermédiaires qui comportent chacun un ou plusieurs échangeurs intermédiaires, des tuyauteries de liaison, une ou plusieurs pompes de circulation et des composants auxiliaires.

Pour des raisons économiques, le nombre des boucles intermédiaires est limité et la puissance unitaire de chacune de ces boucles est en conséquence importante par rapport à la puissance totale de l'installation. Les composants constituant ces boucles sont donc obligatoirement de taille importante. L'encombrement des composants et du réseau de tuyauterie nécessite donc des bâtiments de grande dimension où sont logés les différents composants de la centrale.

D'autre part, la circulation forcée dans les boucles du circuit intermédiaire nécessite de prévoir des pompes qui sont coûteuses et comportent un système d'entrainement et de commande compliqué. Enfin, les composants auxiliaires servant, par exemple, à la purification du sodium et aux opérations de manutention des composants sont eux-mêmes coûteux et encombrants.

Pour le refroidissement du réacteur, après arrêt, il est également nécessaire de prévoir des circuits permettant l'évacuation de la puissance résiduelle de celui-ci. Ces circuits ont une structure relativement proche de la structure des circuits intermédiaires pour le transport de la chaleur vers les générateurs de vapeur. De tels circuits comportent un échangeur intermédiaire, des tuyauteries, une pompe et un échangeur sodium/air pou l'évacuation de la chaleur.

On a également proposé de remplacer les échangeurs et les boucles intermédiaires ainsi que les générateurs de vapeur par des composants comportant une enveloppe externe, à l'intérieur de laquelle un fluide d'échange secondaire permet des échanges de chaleur entre le fluide primaire amené par un circuit à ces composants et de l'eau alimentaire à vaporiser. Le fluide primaire et l'eau alimentaire circulent à l'intérieur du composant, dans des tubes plongés dans le fluide secondaire.

De tels dispositifs nécessitent un ou plusieurs circuits de fluide primaire, à l'extérieur de la cuve principale du réacteur et des moyens de pompage pour la mise en circulation du fluide secondaire, ce qui augmente les risques et la complexité de l'installation.

Le but de l'invention est donc de proposer un dispositif de production de vapeur et de prélèvement de la chaleur d'un réacteur nucléaire à neutrons rapides dont le cœur est refoidi par un liquide constituant le fluide primaire contenu dans la cuve principale du réacteur, constitué par un ensemble de composants séparés et identiques comportant chacun une enveloppe externe renfermant un liquide d'échange thermique, appelé fluide secondaire, dont l'échauffement est produit par échange de chaleur avec le fluide primaire, au moins un dispositif générateur de vapeur plongeant dans le fluide secondaire à l'intérieur duquel est amenée de l'eau pour sa vaporisation par la chaleur du fluide secondaire et des moyens de canalisation de la circulation du fluide secondaire à l'intérieur de l'enveloppe entre les zones d'échange de chaleur entre le fluide primaire et le fluide secondaire et les zones d'échange de chaleur entre le fluide secondaire et l'eau, qui ne nécessite pas la présence de circuits de fluide primaire à l'extérieur de la cuve principale du réacteur et de moyens de pompage du fluide secondaire.

Dans ce but, chacun des composants comporte une partie supérieure renfermant le dispositif générateur de vapeur et une partie inférieure plongeant au moins partiellement dans le fluide primaire, à l'intérieur de la cuve principale du réacteur et comportant, sous le niveau du fluide primaire, un dispositif d'échange de chaleur pour l'échauffement du fluide secondaire dont la circulation se produit par convection naturelle à l'intérieur de l'enveloppe, entre le dispositif d'échange de chaleur et le générateur de vapeur.

Afin de bien faire comprendre l'invention, on va maintenant décrire à titre d'exemples non limitatifs, en se référant aux figures jointes en annexe, plusieurs modes de réalisation de composants pour le prélèvement de chaleur dans les réacteurs nucléaires à neutrons rapides refroidis par du sodium liquide.

La figure 1 représente, dans une vue en coupe par un plan vertical de symétrie, un premier mode de réalisation d'un composant permettant la production de vapeur et le prélèvement de chaleur dans la cuve d'un réacteur nucléaire à neutrons rapides de type intégré.

La figure 2 représente, dans une vue de dessus, la disposition de huit composants tels que représentés à la figure 1, à l'intérieur de la cuve du réacteur nucléaire intégré.

La figure 3 représente, dans une vue en coupe par un plan vertical de symétrie, un second mode de réalisation d'un composant.

La figure 4 représente, dans une vue en coupe par un plan vertical de symétrie, une première variante du composant représenté à la figure 3.

La figure 5 représente, dans une vue en coupe par un plan vertical de symétrie, une seconde variante du composant représenté à la figure 3.

La figure 6 représente, dans une vue en coupe par un plan vertical de symétrie, une troisième variante du composant représenté à la figure 3.

La figure 7 représente, de façon schématique, un réacteur nucléaire à boucles comportant une cuve auxiliaire dans laquelle on peut disposer des composants de production de vapeur et de prélèvement de chaleur.

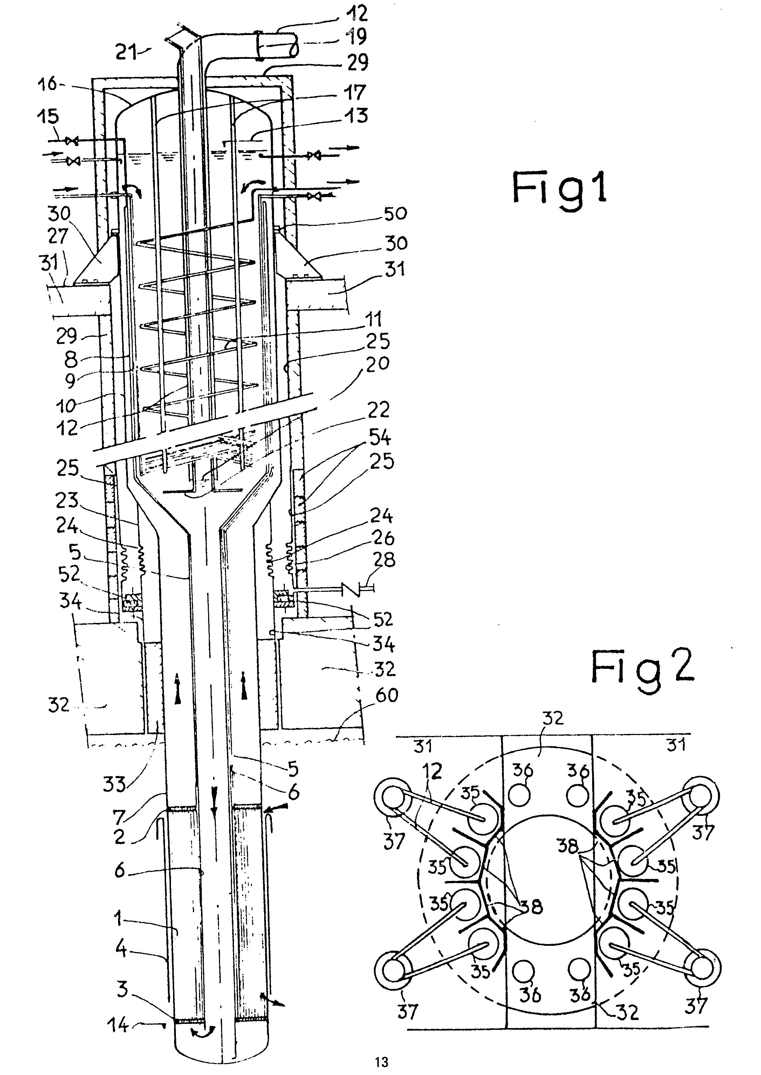

Sur la figure 1, on a représenté l'ensemble d'un composant du dispositif de prélèvement de chaleur et de production de vapeur dans la cuve d'un réacteur nucléaire à neutrons rapides de type intégré plongeant sous le niveau 60 du sodium liquide primaire contenu dans la cuve du réacteur. En partie inférieure, le composant comporte un échangeur intermédiaire entre sodium liquide primaire et sodium liquide secondaire dont le faisceau 1 est constitué de tubes droits disposés en couches circulaires concentriques à l'axe de l'appareil et fixés à leurs extrémités à deux plaques tubulaires 2 et 3 en forme d'anneaux plats. Le faisceau 1 est circonscrit à l'extérieur par une virole cylindrique 4 et à l'intérieur par une virole cylindrique 5 destinées à guider l'écoulement du sodium liquide primaire. Celui-ci pénètre dans le faisceau par l'espace libre ménagé entre la virole 4 et la plaque tubulaire 2, ledit espace étant appelé «fenêtre d'entrée», descend le long de la surface extérieure des tubes, puis sort du faisceau par l'espace libre ménagé entre la virole 4 et la plaque tubulaire 3, ledit espace étant appelé «fenêtre de sortie».

Plus près de l'axe de l'appareil, et concentrique à la virole 5 se trouve un tuyau cylindrique 6 à l'intérieur duquel coule de haut en bas le sodium liquide secondaire, tandis que l'écoulement de bas en haut du sodium liquide secondaire sortant des tubes du faisceau 1 est collecté dans l'espace annulaire délimité par le prolongement vers le haut de la virole 5, d'une part, et par une virole cylindrique 7 fixée en périphérie extérieure de la plaque tubulaire 2, d'autre part.

En partie supérieure de l'appareil se trouve le faisceau 11 du générateur de vapeur. Ce faisceau est constitué de tubes enroulés en hélice, disposés en couches circulaires concentriques à l'axe de l'appareil. Le faisceau 11 est circonscrit à l'extérieur par la virole cylindrique 9 et à l'intérieur par le tuyau 12. A la zone annulaire délimitée par les viroles 5 et 7 partie basse de l'appareil correspond celle délimitée par des viroles 8 et 10 en partie haute, de même qu'à la zone annulaire délimitée par la virole 5 et le tuyau 6, correspond celle délimitée par les viroles 8 et 9, le reccordement entre lesdites viroles de diamètres différents étant réalisé au moyen de viroles tronconiques concentriques disposées entre la partie basse et la partie haute de l'appareil.

L'espace annulaire délimité par les viroles 8 et 9 et son prolongement entre la virole 5 et le tuyau 6 est fermé en partie supérieure et rempli d'argon ou d'un autre gaz inerte approprié maintenu à une pression telle que le niveau 14 du sodium liquide dans l'espace annulaire entre 5 et 6 s'établisse au niveau de la plaque tubulaire 3. On réalise ainsi une isolation thermique par lame de gaz entre la zone annulaire périphérique de l'appareil où circule le sodium liquide froid et la zone centrale où circule le sodium chaud. La régulation de la pression du gaz contenu dans cet espace d'isolation thermique s'effectue par le circuit 15 en fonction de la pression du gaz inerte contenu entre le fond supérieur de l'appareil 16 et le niveau libre supérieur 13 du sodium liquide.

Le faisceau tubulaire 11 est conçu de telle façon que l'on puisse effectuer aisément les démontages nécessaires au cours de la vie de l'appareil; dans ce but, tous les manchons d'entrée et de sortie de chacun des tubes constituant le faisceau sont situés sur le fond supérieur 16 du module générateur de vapeur, auquel sont fixés également des peignes verticaux 17 supportant les enroulements hélicoïdaux des tubes. Chacun des tubes du faisceau après avoir pénétré à travers le fond 16, chemine dans l'espace annulaire situé en périphérie du faisceau entre les enroulements hélicoïdaux et la virole 9 avec un tracé permettant les dilatations thermiques, jusqu'à la base du faisceau d'où il remonte avec un parcours en hélice pour ressortir de nouveau à travers le fond 16. Chaque couche des enroulements est constituée de plusieurs tubes disposés en hélices parallèles, le nombre de tubes pouvant ainsi être enroulés côte-à-côte croissant du centre vers la périphérie. En effet, l'angle d'inclinaison sur l'horizontale des enroulements étant constant, le pas des hélices est plus petit au centre qu'en périphérie; par ailleurs, le sens droite ou gauche des enroulements est alterné lorsque l'on passe d'une couche à l'autre.

Le fond 16 est lié à la virole 10 par une bride boulonnée 50, située au-dessous du niveau libre 13, dont l'ouverture permet d'enlever simultanément le fond 16 et l'ensemble du faisceau 11.

A l'extérieur de l'appareil, les tubes du générateur de vapeur 11 sont reliés à au moins une boite à eau et à au moins une boite à vapeur.

Le fonctionnement du générateur de vapeur selon l'invention découle de façon claire de la description qui précède: le sodium liquide secondaire froid contenu dans le tuyau 6 circule vers le bas, puis pénètre dans les tubes du faisceau 1 par leur extrémité inférieure où il est chauffé par le sodium liquide primaire qui circule de haut en bas autour des tubes.

Le sodium liquide secondaire chaud sortant des tubes du faisceau 1 monte dans l'espace annulaire entre les viroles 5 et 7, puis dans l'espace annulaire entre les viroles 8 et 10, et revient au centre de l'appareil par déversement au-dessus du sommet de l'espace annulaire rempli de gaz entre les viroles 8 et 9; il circule ensuite dans le sens descendant autour des tubes du faisceau 11 en cédant sa chaleur à l'eau et à la vapeur contenues à l'intérieur de ceux-ci, et retourne froid dans le tuyau 6.

On sait que dans les générateurs de vapeur fonctionnant avec du sodium liquide des précautions particulières doivent être prises pour limiter les dommages consécutifs à la réaction chimique énergétique qui se produit si l'eau entre en contact avec le sodium par une fuite dans un tube du faisceau 11. Dans ce but, l'appareil est muni en partie supérieure d'un tuyau central 12 fixé au fond supérieur 16 qu'il traverse en son centre et portant, à l'extérieur de l'appareil, une membrane de rupture 19. Le tuyau 12 se prolonge à l'intérieur de l'appareil jusqu'à la base du faisceau 11 et contient de l'argon ou un autre gaz inerte approprié à une pression telle que le niveau du sodium 20 dans le tuyau 12 s'établisse au voisinage de son extrémité inférieure. En cas de réaction sodium-eau, les produits de cette réaction et une partie du sodium contenu dans l'appareil sont évacués par le tuyau 12 dans un circuit de décharge, après éclatement de la membrane 19, et le transfert de masse en résultant permet la décompression des poches gazeuses sous pression formées autour des zones de réaction, en limitant la propagation d'ondes de pression dans le sodium vers le bas de l'appareil de façon à protéger sa partie intérieure des effets de la réaction sodium-eau. Le maintien d'un niveau de sodium bas 20 dans le tuyau 12 est favorable pour éviter qu'une masse liquide trop importante s'oppose par son inertie à une décompression rapide des zones de réaction en cas de fuite dans la partie inférieure du faisceau 11, de même que la présence du niveau libre de sodium supérieur 13 permet une décompression rapide en cas de fuite dans la partie supérieure du faisceau 11. La localisation de la membrane 19 en dehors du sodium liquide présente les avantages suivants:

a) Suppression des ondes de réflexion sonique dans le sodium avant éclatement de la membrane.

b) Simplification de la conception en ce qui concerne le choix de la pression d'éclatement de la membrane; en effet, l'existence du matelas de gaz dans le tuyau 12 rend plus aisée la réalisation d'un compromis acceptable entre les deux exigences contradictoires suivantes auxquelles doit répondre la valeur de cette pression d'éclatement;
 – ne pas être trop élevée pour protéger efficacement les composants du système secondaire contre les effets de la réaction sodium-eau,
 – ne pas être trop basse pour conserver une marge de sécurité suffisante vis-à-vis des surpressions pouvant être créées dans le sodium liquide par certaines sollicitations d'origine externe, telles que notamment les secousses sismiques.

c) Indifférence vis-à-vis des sollicitations transitoires thermiques amenées par le sodium.

d) Facilité de surveillance de l'état de cette membrane, de son entretien et de son remplacement.

Une fonction importante permettant d'assurer une certaine prévention contre le risque de réactions sodium-eau est la détection d'hydrogène dans le sodium liquide que l'on peut réaliser dans l'appareil objet de la présente invention au moyen de tubes de prélèvement 21 cheminant soit dans le tuyau central 12, soit entre le faisceau 11 et la virole 9, qui conduisent le sodium prélevé à la base du faisceau 11 jusqu'à une instrumentation appropriée de détection d'hydrogène située hors de l'appareil. Par un choix judicieux du nombre et de la disposition des points de prélèvement 22 audessous du faisceau 11, on peut obtenir une pré-localisation de la zone du faisceau où se trouve une fuite éventuelle, facilitant ainsi un repérage précis ultérieur du tube endommagé.

Le composant est en outre muni de piquages d'entrée et de sortie de sodium situés au voisinage de la surface libre supérieure par lesquels s'effectuent l'écoulement du trop-plein ou l'appoint de sodium de façon à maintenir constant le niveau libre supérieur 13. Les deux autres niveaux libres en sodium dans le composant 14 et 20 sont déterminés en fonction de ce niveau 13. Le circuit de maintien de niveau est par ailleurs relié à un circuit de purification du sodium secondaire permettant de conserver à celui-ci des caractéristiques compatibles avec un bon fonctionnement de l'appareil. L'instrumentation du composant est complétée par des perches de mesures du niveau sodium supérieur continues et discontinues, des piquages pour tubes de prélèvement du gaz de la couverture supérieure pour la détection d'hydrogène dans ce gaz, et des piquages pour thermocouples de mesure des températures du sodium à l'entrée du faisceau 11, tous ces équipements étant portés par le fond supérieur 16. Par ailleurs, des thermocouples de mesure des températures du sodium à la sortie du faisceau 11 peuvent cheminer par l'intérieur du tuyau 12 jusqu'à la base du faisceau.

Le supportage du composant est réalisé au moyen de plusieurs pattes 30 fixées au corps supérieur 10 et scellées par des tirants dans le plancher 31 de la structure de génie civil du bâtiment réacteur, l'appareil traversant ledit plancher 31 par un orifice circulaire. De même, le corps inférieur 7 de l'appareil traverse par un orifice circulaire la dalle 32 de fermeture supérieure de la cuve du réacteur; au niveau de cette traversée est disposée une pièce 33 fixée au corps inférieur 7 réalisée soit sous la forme d'un assemblage de pièces massives en métal, soit sous la forme d'une structure caissonnée remplie de grenaille métallique, ayant pour fonction d'assurer simultanément:

– la continuité de la protection biologique dans le jeu entre l'appareil et la traversée de la dalle 32 vis-à-vis des rayonnements directs en provenance de l'intérieur du réacteur;

– le blocage des mouvements horizontaux de balancement de l'appareil en cas de séisme;

– et cependant un guidage latéral de la partie inférieure de l'appareil au moyen d'un ensemble de clavettes et de rainures prévues en correspondance les unes des autres sur les deux surfaces verticales en regard de la pièce 33 et de la traversée de la dalle 32, avec des jeux appropriés pour permettre les mouvements relatifs verticaux et radiaux dus notamment aux dilatations thermiques différentielles des viroles et aux déformations subies par la dalle 32 en fonction des conditions de service du réacteur.

Il est important de souligner que la dalle 32 de fermeture du réacteur ne supporte aucunement le poids du composant. De même, elle ne reprend aucune surcharge due par exemple aux effets des secousses sismiques verticales sur ces composants. Elle se trouve également soulagée du poids et des surcharges sismiques éventuelles des échangeurs intermédiaires et d'une partie des tuyauteries principales sodium secondaire par rapport à ce qu'il en est pour les réacteurs à neutrons rapides du type intégré de l'art antérieur. Ce fait doit permettre d'augmenter le diamètre des traversées de la dalle 32 par rapport aux conceptions existantes et faciliter l'installation des composants selon l'invention. L'existence d'un clavetage radial au niveau de la traversée de la dalle 32 permet d'assurer un bon maintien de l'appareil lorsqu'il est soumis aux secousses sismiques horizontales et évite qu'il subisse des conséquences préjudiciables d'éventuels mouvements relatifs entre le plancher 31 et la dalle 32 dus aux secousses sismiques verticales.

Afin d'assurer l'étanchéité autour du composant contre les sorties du gaz de couverture surmontant le sodium liquide primaire contenu dans la cuve, une virole 23 concentrique à l'axe de l'appareil, fixée sur le corps supérieur 10 et munie d'un compensateur de déplacements relatifs 24, est liée à une manchette de traversée 34 par un assemblage à brides 52. Autour des viroles 23 et 24 sont prévues des écrans démontables 54 de protection biologique contre la radioactivité de la couverture gazeuse primaire. En cas de fuite de l'enveloppe du composant, il faut éviter que du sodium liquide se répande sur la fermeture supérieure du réacteur et s'y enflamme au contact de l'air. Dans ce but, il est prévu une double enveloppe constituée par une virole 25 concentrique à la virole 10, munie d'un compensateur de déplacements relatifs 26 en partie basse et se raccordant à la traversée 34. En partie haute, la virole 25 se raccorde en périphérie de la traversée à la tôle 27 de protection de la face supérieure du béton du plancher 31 de manière à réaliser une continuité avec cette tôle.

En cas de fuite de l'enveloppe 10 au-dessus du plancher 31, le sodium liquide issu de l'appareil est recueilli sur la tôle 27 d'où il s'écoule soit dans des dispositifs de récupération prévus par ailleurs, soit dans l'espace annulaire entre 10 et 25. En cas de fuite en-dessous du plancher 31 et au-dessus du point d'attache de la virole 23 avec le corps supérieur de l'appareil, le sodium est collecté dans le fond de l'espace annulaire entre 10 et 25 d'où il est évacué par un ou plusieurs tuyaux 28 vers les dispositifs de récupération. En cas de fuite en-dessous de la liaison de la virole 23 avec le corps supérieur et en cas de fuite de la virole 7, le sodium issu de l'appareil s'écoule dans le réacteur entrainant uniquement une montée du niveau dans la cuve, qui ne présente pas d'inconvénient majeur du fait du faible volume de sodium de l'appareil, si l'on a prévu une distance suffisante entre le niveau normal et la face inférieure de la dalle du réacteur pour éviter le noyage du calorifuge porté par celle-ci.

Il en va de même en cas de fuite dans le fond inférieur de l'appareil ou dans le faisceau 1; en effet de par la situation de l'appareil selon l'invention, la pression du fluide de refroidissement secondaire est toujours supérieure à celle du réfrigérant primaire, dans les conceptions courantes de réacteurs à neutrons rapides du type intégré où la pression de la couverture gazeuse du réacteur est voisine de la pression atmosphérique. Dans d'autres conceptions où cette pression serait plus élevée, un étagement favorable des pressions entre réfrigérants primaire et secondaire peut toujours être maintenu en augmentant la pression de la couverture gazeuse en partie supérieure de l'appareil.

Enfin, une fuite de l'une des viroles 5, 6, 8 ou 9 provoque une remontée du niveau de sodium 14 dans l'espace annulaire constituant isolation thermique par lame de gaz, ce qui conduit à une dégradation des performances de l'appareil détectable par des mesures de température.

Des moyens de détection de fuite de sodium peuvent être disposées dans le fond de l'espace annulaire entre les viroles 10 et 25 pour déceler les fuites dans le corps supérieur de l'appareil; de façon générale, tous les cas de fuite peuvent être détectés par les mesures de niveau à l'intérieur du composant lui-même ou du réacteur. Autour des viroles 25 et 26 et du sommet de l'appareil est disposé un élément calorifuge cylindrique 29 pour limiter les pertes thermiques.

La figure 2 représente une vue de dessus d'un réacteur à neutrons rapides du type intégré équipé de huit composants générateurs de vapeur 35 identiques au composant décrit en se référant à la figure 1, et de quatre pompes 36 de circulation du réfrigérant primaire. Les composants 35 sont groupés par moitié de part et d'autre d'une zone centrale où sont disposées les pompes primaires 36. La disposition présentée ici a l'avantage de permettre une meilleure homogénéisation de la température du sodium liquide primaire dans la zone du réacteur appelée «collecteur froid» où est collecté le réfrigérant primaire sortant des faisceaux 1 et d'où il est repris par les pompes primaires pour être envoyé dans le coeur du réacteur. En effet, au moment où un composant 35 devient indisponible, le réfrigérant primaire chaud issu de cet appareil se mélange mieux avec le sodium primaire froid issu des autres appareils disponibles avant d'être aspiré par les pompes primaires, ce qui minimise les chocs thermiques sur les structures assurant la fonction d'alimentation du coeur en réfrigérant primaire.

Le principe de l'arrangement des pompes primaires 36 et des composants 35 tel que représenté sur la figure 2 peut de façon évident être transposé au cas d'un autre nombre de pompes et de composants implantés dans le réacteur.

Quatre réservoirs 37 reliés chacun à deux composants 35 par deux conduits 12, avec interposition de séparateurs sodium-hydrogène, permettent de recueillir les produits de la réaction eau-sodium en cas de fuite sur un des composants.

Autour du sommet de chaque composant, au-dessus du plancher 31, sont disposés des dispositifs anti-fouettement non représentés pour le maintien des tuyaux et des boites à eau et à vapeur, conçus de façon que la rupture brutale de l'un de ces éléments ne puisse provoquer de dommage aux composants 35. Des casemates de protection anti-missiles 38 permettent de protéger l'enveloppe sodium des composants 35 du risque d'impact par des débris d'éléments contenant de la vapeur sous pression en cas de rupture de ces éléments. La présence du plancher 31 contribue en outre efficacement à la sécurité du dispositif en réalisant une séparation physique des éléments contenant de l'eau ou de la vapeur de l'enveloppe sodium des composants 35.

Les composants tels que décrits en se référant aux figures 1 et 2 comportent un faisceau tubulaire comparable au faisceau tubulaire des échangeurs intermédiaires de l'art antérieur. Il est également possible de concevoir des composants de structure différente et généralement de taille plus réduite, si bien qu'il est nécessaire d'en associer un plus grand nombre au réacteur nucléaire pour la production de vapeur et éventuellement la mise en arrêt à froid du réacteur, comportant une surface d'échange entre fluide primaire et fluide secondaire du réacteur différente d'un faisceau tubulaire classique.

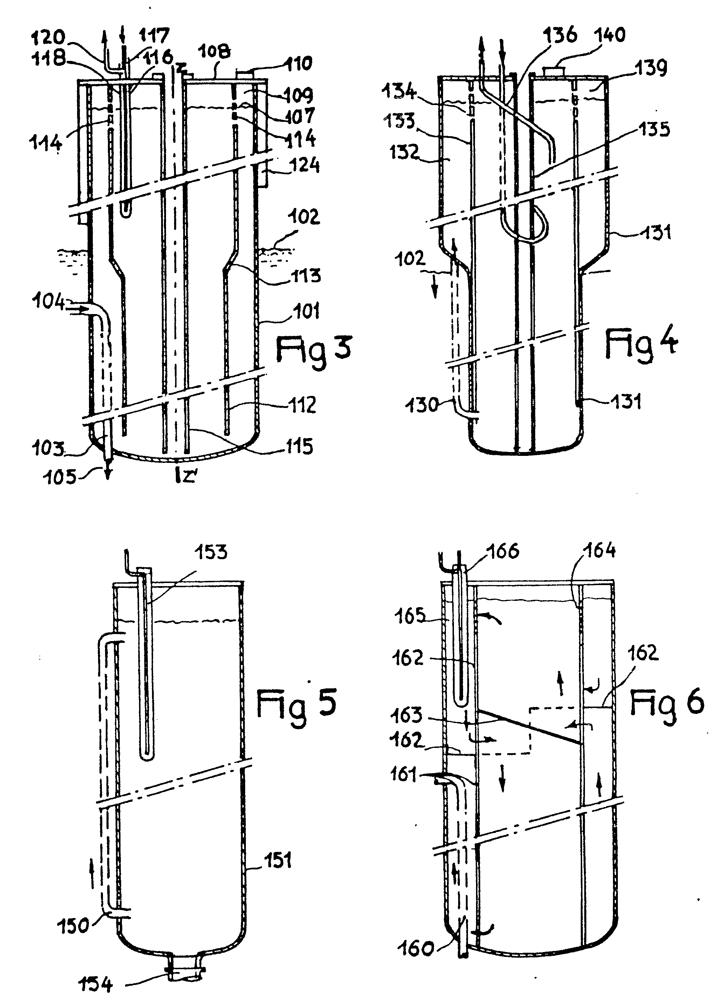

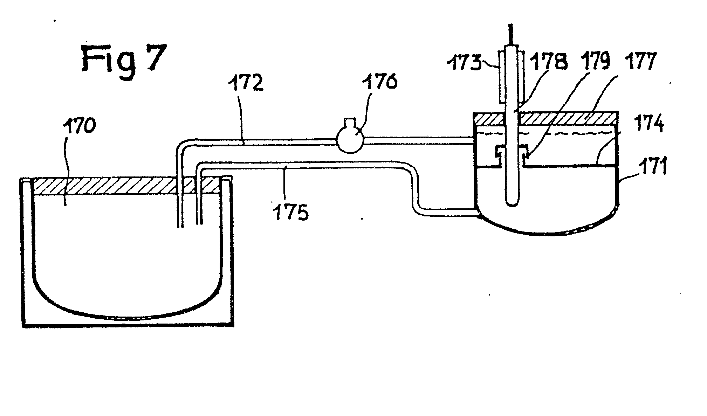

On va d'abord décrire les composants représentés aux figures 3 à 6, tels qu'ils sont utilisés dans un réacteur nucléaire du type intégré. On décrira ensuite leur utilisation dans le cas d'un réacteur à boucles, comportant une cuve auxiliaire en se référant à la figure 7.

Sur la figure 3, on voit un composant dont la partie inférieure de l'enveloppe 101 plonge sous le niveau 102 du sodium liquide contenu dans la cuve d'un réacteur nucléaire à neutrons rapides de type intégré. Le composant de très grande longueur est disposé verticalement dans la cuve dont il traverse la dalle au niveau d'une ouverture correspondante. Pour la commodité de la représentation, on n'a représenté qu'une partie de la longueur de ce composant, dont la structure est uniforme.

A l'intérieur de l'enveloppe 101, dans sa partie inférieure plongeant dans le sodium liquide, un certian nombre de tubes tels que 103 ont été ménagés pour la circulation du sodium liquide remplissant la cuve et constituant le fluide primaire. Ce fluide primaire est mis en circulation suivant la direction représentée par les flèches 104 et 105 grâce à des pompes immergées dans ce sodium liquide et non représentées. On n'a pas représenté non plus les structures de séparation des collecteurs chaud et froid du circuit primaire.

Les tubes 103 sont ménagés à l'intérieur de l'enveloppe 101, dans sa partie inférieure, dans des positions se déduisant les unes des autres par rotation autour de l'axe de symétrie ZZ' du dispositif.

L'enveloppe 101 du composant est remplie jusqu'au niveau 107 par du sodium liquide constituant le sodium secondaire. La partie supérieure du composant est fermée par un couvercle 108 ménageant une zone 109 au-dessus du niveau 107 du sodium liquide, remplie par un gaz inerte tel que de l'argon sous une certaine pression.

Dans le couvercle 108 est disposée une membrane 110 servant de dispositif de sécurité en cas de surpression à l'intérieur du composant créée par une fuite d'eau et la réaction sodium: eau consécutive. Un écran déflecteur 112 symétrique de révolution autour de l'axe ZZ' est d'autre part disposé verticalement à l'intérieur du composant et sur toute sa longueur.

Cet écran déflecteur comporte une partie inférieure dont le diamètre est inférieur au diamètre de la partie supérieure et une zone intermédiaire 113 de forme tronconique. Cet écran est recouvert de matériau d'isolement thermique sur toute sa partie plongeant dans le sodium liquide et comporte à sa partie supérieure des ouvertures 114 permettant le passage du sodium liquide à travers la paroi de l'écran déflecteur. Un espace est d'autre part ménagé à la partie inférieure de l'écran au-dessus du fond de l'enveloppe 101 du composant.

A la partie centrale du composant est placé un tube 115 plongeant dans le sodium liquide, en position verticale avec son axe confondu avec l'axe ZZ' du composant. Ce tube sert à la vidange du composant au cas où de l'eau viendrait en contact avec le sodium liquide à l'intérieur du composant.

D'autre part, des échangeurs de chaleur tels que l'échangeur 116 représenté à la figure 3 sont plongés dans le sodium liquide contenu dans l'enveloppe 101, à l'intérieur du volume délimité par la partie supérieure de l'écran déflecteur 112.

Ces échangeurs de chaleur eau-sodium liquide comportent un tube central 117 d'amenée d'eau à l'intérieur d'un tube externe 118 où se produit la vaporisation de l'eau sous l'effet de la chaleur du sodium liquide secondaire contenu dans l'enveloppe 101. La vapeur produite sort à la partie supérieure du tube 118 par un tube de transport 120 qui emmène cette vapeur vers une conduite de grand diamètre assurant le recueil et le transport de la vapeur produite par les différentes unités génératrices de vapeur 116 disposées dans le composant ou dans d'autres composants identiques placés dans la cuve du réacteur nucléaire.

Cette conduite de recueil et de transport de grand diamètre emmène à son tour la vapeur vers les dispositifs de traitement de celle-ci avant son utilisation à la turbine.

En utilisant le dispositif suivant l'intervention, la vapeur est donc produite par un ensemble d'unités indépendantes groupées à l'intérieur de composant tels que celui qui vient d'être décrit, ces composants étant eux-mêmes disposés de façon indépendante, de façon que leur partie inférieure plonge dans le sodium liquide contenu dans la cuve du réacteur nucléaire.

Le composant représenté à la figure 4 est également équipé à sa partie supérieure d'ailettes de refroidissement 124 fixées sur la surface externe de l'enveloppe 101. Ces ailettes peuvent servir au refroidissement du sodium liquide par de l'air, dans la partie supérieure du composant se trouvant au-dessus de la dalle fermant la cuve du réacteur, c'est à dire dans une zone qui peut être facilement ventilée.

Nous allons maintenant décrire le fonctionnement du composant représenté à la figure 3, dans le cas du fonctionnement normal avec production de vapeur et dans le cas du refroidissement du réacteur à l'arrêt. Il suffit de décrire le fonctionnement d'un seul composant, tous les autres composants disposés dans la cuve du réacteur étant identiques et fonctionnant de la même façon.

Le fluide primaire mis en circulation par les pompes pénètre dans les tubes 103, se déplace à l'intérieur de ceux-ci de haut en bas et pendant ce parcours échauffe le sodium liquide secondaire contenu dans l'enveloppe 101.

Dans un exemple de réalisation, le fluide primaire entre dans les tubes 103 à 550° et ressort de ces tubes à 390° après avoir échauffé le fluide secondaire. Ce sodium liquide secondaire qui est à 280° à la partie basse du composant s'échauffe jusqu'à 530°C en s'élevant le long des tubes 103 dans l'espace annulaire ménagé entre l'écran déflecteur 112 et l'enveloppe 101. Ce sodium secondaire circule vers le haut par convection naturelle jusqu'au niveau des ouvertures 114 où ce sodium secondaire à 530°C passe dans la zone d'espace ménagée à l'intérieur du composant par l'écran 112. Le sodium liquide vient alors en contact avec la surface externe des tubes générateurs de vapeur 116 et se refroidit au contact de ces tubes de 530° à 280°C en vaporisant l'eau amenée par les tubes 117.

La colonne de sodium à 280°C descend alors dans la partie inférieure du composant à l'intérieur de la zone d'espace limitée par l'écran 112. Elle parvient ainsi à la partie inférieure du composant où elle peut à nouveau passer dans la zone annulaire externe de celui-ci pour s'échauffer au contact du fluide primaire passant dans les tubes 103.

Lorsque le réacteur est mis à l'arrêt et qu'on désire évacuer la puissance résiduelle de ce réacteur, on interrompt l'alimentation en eau des générateurs de vapeur 116 et l'on ventile la surface externe du composant au-dessus de la dalle, au niveau des ailettes 124.

La circulation du sodium liquide contenu dans l'enveloppe 101 est alors inversée puisque ce sodium se refroidit dans la zone annulaire externe du composant au contact de la paroi refroidie par les ailettes ventilées 124. La colonne froide descend alors par la zone annulaire et vient au contact des tubes 103 dans lesquels passe le fluide primaire, la circulation par les pompes du sodium primaire de la cuve étant maintenue. Le sodium liquide secondaire échauffé au contact des tubes 103 passe dans la zone centrale du composant pour remonter jusqu'au niveau des ouvertures 114 où le sodium liquide passe dans la zone annulaire où a lieu le refroidissement au contact de la paroi portant les ailettes 124.

Avec un nombre suffisant de composants disposés dans la cuve du réacteur, on peut ainsi obtenir le refroidissement du réacteur de façon relativement rapide.

Sur la figure 4, on voit un second mode de réalisation d'un composant ayant les mêmes fonctions que le composant représenté à la figure 4.

Dans ce second mode de réalisation, le sodium liquide primaire cède sa chaleur au sodium liquide secondaire le long de tubes 130 parcourus de bas en haut par le fluide secondaire en cours d'échauffement et en contact par leur surface externe avec le fluide primaire circulant de haut en bas.

La zone annulaire 132 disposée à la partie supérieure du composant dans laquelle se déplace le fluide secondaire échauffé est limitée par une partie à grand diamètre de l'enveloppe 131 et par l'écran 133 percé d'ouvertures 134 dont le prolongement réalise l'isolation thermique de la partie interne du composant par rapport au sodium primaire en contact avec la surface externe de l'enveloppe 101.

Le générateur de vapeur 136 est constitué par un tube enroulé en hélice autour du tube central 135 servant à la vidange du composant.

Une membrane 140 permet d'assurer la décompression éventuelle de la zone supérieure 139 du composant dans lequel se trouve de l'argon sous pression au-dessus de la surface du sodium liquide secondaire.

Sur la figure 5, on voit un troisième mode de réalisation du composant comportant des tubes 150 permettant l'échange de chaleur entre le fluide primaire et le fluide secondaire et constituant la surface externe d'échange de l'enveloppe 151.

Ces tubes 150 sont prolongés jusqu'à la partie supérieure du composant où le sodium secondaire vient en contact avec les générateurs de vapeur 153 pour la vaporisation de l'eau.

Une membrane 154 permet d'éviter les surpressions. Le sodium liquide secondaire froid après son contact avec les générateurs de vapeur 153 redescend à la partie inférieure de l'enveloppe 151 à l'intérieur du tube central.

Sur la figure 6, on voit un quatrième mode de réalisation du composant où l'on inverse à un certain niveau les colonnes chaudes et froides du sodium secondaire en circulation.

Des tubes 160 permettent, comme dans le dispositif représenté à la figure 4, l'échange de chaleur entre le fluide primaire et le fluide secondaire.

Le fluide secondaire s'élève dans la partie périphérique du composant limitée par un écran 161. Au voisinage de la partie médiane du composant, des déflecteurs 162 et 163 permetent de faire passer le sodium liquide secondaire dans la partie centrale du composant limitée par la partie supérieure de l'écran 161.

A sa partie supérieure, l'écran 161 comporte des ouvertures 164 permettant le passage du sodium secondaire dans la zone annulaire supérieure 165 où sont disposés les générateurs de vapeur 166 identiques au générateur de vapeur 116 décrit en se référant à la figure 4.

Le sodium secondaire, après son contact avec la surface externe des générateurs de vapeur 166, est guidé par les déflecteurs 163 et 162 vers la partie centrale inférieure du composant pour son retour dans la zone annulaire externe où se produit l'échange avec le fluide primaire, après passage sous le déflecteur 161 à la partie la plus basse du composant.

Sur la figure 7, on voit la cuve 170 d'un réacteur nucléaire à neutrons rapides renfernant du sodium liquide appelé sodium primaire, dans lequel plonge le coeur du réacteur.

On a représenté une boucle du circuit primaire sur laquelle est disposée une cuve auxiliaire 171. Le sodium chaud venant de la cuve principale est amené à la partie supérieure de la cuve auxiliaire 171 en deux parties dont l'une renferne le sodium chaud et l'autre le sodium refroidi avant son retour à la cuve 171, par la conduite primaire 175.

On a représenté un composant 178 dont la structure peut être identique à la structure représentée sur l'une des figures 3 à 6, en position dans la cuve 171. Ce composant plonge dans la cuve 171, de façon que sa partie inférieure soit dans le sodium froid et sa partie supérieure dans le sodium chaud. La structure de séparation de la cuve 171 permet au sodium primaire chaud de circuler au contact du composant 178 pour échauffer le sodium secondaire, puis de passer dans la zone inférieure après son refroidissement par le sodium secondaire. Le passage d'une zone à l'autre peut se faire par exemple à l'intérieur des tubes 103 traversant le composant tel que représenté à la figure 3. La cuve 171 est fermée par une dalle 177 comportant des ouvertures pour le passage des composants 178.

Au-dessus de la dalle le composant 178 porte des ailettes de refroidissement 173 permettant le refroidissement à l'air du sodium secondaire dans le composant et donc le refroidissement du sodium primaire en cas d'arrêt du réacteur.

Le composant porte une structure 179 permettant de réaliser une étanchéité entre les deux zones de la cuve 171 grâce à une barrière de gaz.

Il est bien évident qu'on peut disposer dans la cuve 171 un nombre quelconque de composants tels que 178.

Le sodium secondaire échauffé dans les composants 178 sert à son tour à produire de la vapeur dans des générateurs de vapeur tel que 116 représenté sur la figure 3.

Les composants suivant l'invention peuvent donc être utilisés dans une cuve auxiliaire en communication avec le circuit primaire d'un réacteur nucléaire à neutrons rapides à boucles, de la même façon que dans la cuve d'un réacteur de type intégré, une cuve auxiliaire étant disposée sur chacune des boucles du circuit primaire.

On voit que les principaux avantages du dispositif suivant l'invention sont de permettre la production de vapeur sans utilisation de générateurs de vapeur de grande dimension, d'un réseau de tuyauteries important et d'organes auxiliaires pour la circulation du fluide secondaire et du fluide primaire. Au contraire, la vapeur est produite à l'intérieur de générateurs de vapeur plongeant dans les composants contenant le fluide secondaire et la circulation du fluide secondaire dans ces composants se produit par convection naturelle, une canalisation du fluide secondaire étant cependant nécessaire à l'intérieur de ces composants.

D'autre part, ces composants permettent de réaliser l'évacuation de la puissance résiduelle du réacteur en cas d'arrêt de celui-ci sans utilisation d'installations de refroidissement supplémentaires. Les composants ou modules peuvent être groupés en nombre quelconque dans la cuve du réacteur nucléaire ou dans une cuve auxiliaire et cette construction modulaire présente des avantages quant à la simplification de la fabrication, de la conception et des modifications éventuelles à apporter au réacteur.

L'utilisation du dispositif selon l'invention permet ainsi un gain important sur le volume des bâtiments, la suppression des pompes secondaires et de nombreux auxiliaires et une simplification dans la construction du réacteur et de ses composants auxiliaires.

En particulier, les modules suivant l'invention peuvent être entièrement construits en usine et la masse d'acier inoxydable nécessaire pour leur construction est moindre que dans le cas des dispositifs classiques utilisant des générateurs de vapeur de grande dimension situés en dehors de la cuve du réacteur.

En utilisant un nombre suffisant de modules comportant une partie supérieure munie de moyens de refroidissement, on peut évacuer totalement la puissance résiduelle du réacteur après l'arrêt de celui-ci.

Les modules peuvent être construits en série et leur essai peut être effectué en vraie grandeur sur une installation d'essai.

La puissance du réacteur peut être modifiée en utilisant un nombre plus ou moins grand de modules sans modifier les composants eux-mêmes.

Enfin, en cas d'apparition d'une fuite et d'une réaction de l'eau et du sodium, d'une part des dispositifs de sécurité permettent de vidanger le composant défectueux et d'autre part il est possible d'arrêter définitivement le fonctionnement du composant sans perturber notablement les conditions thermiques dans le circuit primaire.

Il est également possible d'effectuer la réparation du module défectueux. Dans le cas d'un générateur de vapeur constitué lui-même sous forme modulaire, il est possible de réparer uniquement le module défectueux du générateur de vapeur.

L'invention ne se limite pas aux modes de réalisation qui ont été décrits; elle en comporte au contraire toutes les variantes.

C'est ainsi qu'on peut imaginer des modules comportant une enveloppe externe de forme quelconque, à partir du moment où elle permet un échange de chaleur dans de bonnes conditions entre le fluide primaire et le fluide secondaire. On peut également imaginer une circulation du fluide secondaire suivant un parcours quelconque dans le module entre les zones d'échange avec le fluide primaire et les zones où se produit la vaporisation.

On peut également envisager d'augmenter la vitesse de circulation du fluide secondaire par des moyens mécaniques ou électromagnétiques placés sur le composant. On peut ainsi augmenter la puissance échangée ou réduire l'encombrement du composant en superposant l'action de ces moyens à celle de la convection naturelle.

Le fluide secondaire, de même que le fluide primaire, peut être différent du sodium liquide, ce fluide peut par exemple être un mélange de sodium et de potassium (Na.K).

Les générateurs de vapeur disposés dans le module peuvent être d'un type quelconque et être réalisés sous une forme unitaire ou sous une forme modulaire.

Enfin, le dispositif suivant l'invention s'applique dans le cas de tous les réacteurs nucléaires à neutrons rapides soit pour le prélèvement de chaleur dans la cuve du réacteur, soit pour évacuer la puissance dégagée par des assemblages combustibles dans une zone de stockage.

## Revendications

1. Dispositif de production de vapeur et de prélèvement de la chaleur d'un réacteur nucléaire à neutrons rapides dont le cœur est refroidi par un liquide constituant le fluide primaire contenu dans la cuve principale du réacteur, constitué par un ensemble de composants séparés et identiques comportant chacun une enveloppe externe (1, 7, 10) renfermant un liquide d'échange thermique, appelé fluide secondaire, dont l'échauffement est produit par échange de chaleur avec le fluide primaire, au moins un dispositif générateur de vapeur (11) plongeant dans le fluide secondaire à l'intérieur duquel est amenée de l'eau pour sa vaporisation par la chaleur du fluide secondaire et des moyens (5, 6, 8, 9) de canalisation de la circulation du fluide secondaire à l'intérieur de l'enveloppe (1, 7, 10) entre les zones d'échange de chaleur entre le fluide primaire et le fluide secondaire et les zones d'échange de chaleur entre le fluide secondaire et l'eau, caractérisé par le fait que chacun des composants comporte une partie supérieure renfermant le dispositif générateur de vapeur (11) et située au-dessus du niveau du fluide primaire et une partie inférieure plongeant au moins partiellement dans le fluide primaire, à l'intérieur de la cuve principale du réacteur et comportant, sous le niveau (60) du fluide primaire, un dispositif d'échange de chaleur (1) pour l'échauffement du fluide secondaire dont la circulation se produit par convection naturelle à l'intérieur de l'enveloppe (1, 7, 10) entre le dispositif d'échange de chaleur et le générateur de vapeur (11).

2. Dispositif de production de vapeur et de prélèvement de chaleur suivant la revendication 1, dans le cas d'un réacteur de type intégré dont la cuve est fermée par une dalle horizontale de forte épaisseur, caractérisé par le fait que l'enveloppe externe de chacun des composants, symétrique de révolution et de grande hauteur est disposée avec son axe de symétrie vertical et traverse la dalle (32) de façon que sa partie inférieure (7) comportant un faisceau tubulaire (1) plonge dans le fluide primaire à l'intérieur de la cuve et que sa partie supérieure (10) renfermant le générateur de vapeur (11) soit disposée au-dessus de la dalle (32) et supportée, indépendamment de la dalle (32), par la structure du bâtiment réacteur.

3. Dispositif suivant l'une quelconque des revendications 1 et 2, dans le cas où le fluide secondaire est du sodium liquide, caractérisé par le fait qu'un tube (12) sensiblement vertical traversant l'enveloppe du composant et plongeant dans le sodium secondaire, à l'intérieur de celle-ci est rempli de gaz inerte sous pression de façon à maintenir un niveau (20) de sodium dans le tube (12) inférieur au niveau libre (13) du sodium dans l'enveloppe du composant, jusqu'au niveau d'une membrane de rupture (19) disposée dans le tube (12), l'extrémité supérieure du tube, au-delà de la membrane de rupture (19) étant reliée à un moyen d'évacuation des produits de réaction éventuelle entre l'eau et le fluide secondaire, en cas de fuite du générateur de vapeur (11).

4. Dispositif de production de vapeur suivant la revendication 2, caractérisé par le fait que le composant est entouré sur une partie de sa hauteur au-dessus de la dalle (32) du réacteur par une double enveloppe constituée par deux viroles (23, 25) munies de compensateurs de dilatation (24, 26) fixées à leur partie inférieure, l'une et l'autre à une pièce (33) fixée à la partie inférieure (7) de l'enveloppe du composant et disposée au niveau de la dalle (32) lorsque le composant est en place dans la cuve du réacteur, et à la structure du réacteur, pour l'une, et au composant, pour l'autre, à leurs parties supérieures, l'espace entre les deux viroles (23, 25) recueillant éventuellement le fluide secondaire provenant d'une fuite de la partie supérieure (10) du composant.

5. Dispositif de prélèvement selon la revendication 1, caractérisé par le fait que le dispositif d'échange de chaleur entre le fluide primaire et le fluide secondaire est constitué par un ensemble de tubes (130) constituant une partie externe de l'enveloppe et en communication avec la partie interne de celle-ci, pour la circulation du fluide secondaire, à l'intérieur des tubes (130) dont la surface externe est en contact avec le fluide primaire, un écran déflecteur (133) disposé à l'intérieur de l'enveloppe (131) délimitant dans celle-ci une zone périphérique annulaire (132) communiquant avec les tubes (130) et une zone centrale dans laquelle sont disposés les générateurs de vapeur (136).

6. Dispositif de prélèvement selon la revendication 1, caractérisé par le fait que le dispositif d'échange de chaleur est constitué par un ensemble de tubes (150) communiquant à chacune de leurs extrémités avec le volume interne de l'enveloppe (151) de forme tubulaire, les tubes (150) de grande longueur et constituant une partie externe de cette enveloppe permettant la circulation du fluide secondaire et son échauffement dans leur volume interne, la paroi externe de ces tubes étant en contact avec le fluide primaire et les générateurs de vapeur (153) plongeant dans le fluide secondaire remplissant l'enveloppe tubulaire (151).

7. Dispositif de prélèvement selon la revendication 1, caractérisé par le fait que les moyens de canalisation de la circulation du fluide secondaire dans l'enveloppe sont constitués par des déflecteurs (161, 162, 163) délimitant à l'intérieur de l'enveloppe du composant de grande longueur disposée verticalement une zone annulaire périphérique, dans la partie inférieure du composant, communiquant avec une partie tubulaire centrale dans la partie inférieure du composant et une zone tubulaire centrale dans la partie inférieure du composant communiquant avec une partie annulaire périphérique dans la partie supérieure du composant, le dispositif d'échange de chaleur (160) entre le fluide primaire et le fluide secondaire ainsi que les générateurs de vapeur (166) étant disposés dans chacune des zones périphériques respectivement.

8. Dispositif de production de vapeur selon l'une quelconque des revendications 1 à 7, dans le cas d'un réacteur nucléaire de type intégré, caractérisé par le fait que les composants (35) plongeant dans la cuve du réacteur forment deux ensembles disposés symétriquement par rapport à un diamètre du réacteur au voisinage duquel sont situées les pompes primaires du réacteur (36).

9. Dispositif de prélèvement de chaleur selon l'une quelconque des revendications 1, 5, 6 et 7, dans le cas d'un réacteur nucléaire à neutrons rapides comportant un circuit primaire de circulation du liquide de refroidissement à l'extérieur de la cuve formé d'au moins deux boucles, caractérisé par le fait que les composants (178) sont plongés dans le liquide de refroidissement primaire, à l'intérieur de cuves auxiliaires (171) placées sur chacune des boucles du circuit primaire et recerante le liquide de refroidissement qui a été échauffé au contact du cœur du réacteur.

10. Dispositif de prélèvement de chaleur suivant la revendication 2, caractérisé par le fait que la partie inférieure du composant pénètre dans la cuve par des ouvertures traversant la dalle fermant celle-ci et que la partie supérieure de ces composants disposée au-dessus de la dalle comporte des moyens de refroidissement (124, 173) du fluide secondaire, par échange de chaleur avec l'air ambiant, à travers l'enveloppe (101) du composant.

## Patentansprüche

1. Dampferzeugungs- und Wärmeentnahmevorrichtung eines schnellen Neutronenreaktors, bei welchem der Reaktorkern mittels einer das Primärmedium bildenden Flüssigkeit gekühlt wird, die sich in dem Reaktorhauptbehälter befindet, bestehend aus einer Anzahl getrennter und identischer Bauelemente mit jeweils einem Aussenmantel (1, 7, 10), der eine als Sekundärmedium bezeichnete Wärmetauschflüssigkeit aufnimmt, die durch Wärmeaustausch mit dem Primärmedium erhitzt wird, mit mindestens einer in das Sekundärmedium eintauchenden Dampferzeugeranordnung (11), in welche Wasser zu dessen Zerstäubung durch die Sekundärmediumwärme zugeführt wird, und Rohrleitungsmittel (5, 6, 8, 9) für den Umlauf des Sekundärmediums im Inneren des Mantels (1, 7, 10) zwischen den Wärmeaustauschzonen zwischen dem Primärmedium und dem Sekundärmedium und den Wärmeaustauschzonen zwischen dem Sekundärmedium und dem Wasser, dadurch gekennzeichnet, dass die einzelnen Bauelemente jeweils einen über dem Primärmediumpegel angeordneter Oberteil aufweisen, in welchem die Dampferzeugeranordnung (11) untergebracht ist, und ein im Inneren des Reaktorhauptbehälters mindestens teilweise in das Primärmedium eintauchenden Unterteil, welcher unter dem Primärmediumpegel (60) eine Wärmetauschvorrichtung (1) zur Erhitzung des Sekundärmediums aufweist, dessen Umlauf durch die natürliche Wärmeströmung im Inneren des Mantels (1, 7, 10) zwischen der Wärmetauschvorrichtung und dem Dampferzeuger (11) entsteht.

2. Dampferzeugungs- und Wärmeentnahmevorrichtung nach Anspruch bei einem integrierten Kernreaktor mit einer den Behälter verschliessenden dickwandigen Platte, dadurch gekennzeichnet, dass der rotationssymmetrische und sehr hohe Aussenmantel der jeweiligen Bauelemente mit seiner senkrechten Symmetrieachse angeordnet ist und die Platte (32) derart durchquert, dass dessen ein Rohrbündel (1) aufweisender Unterteil (7) in das Primärmedium im Behälterinneren eintaucht, und dass dessen den Dampferzeuger (11) aufnehmender Oberteil (10) über der Platte (32) angeordnet ist und unabhängig von der Platte (32) durch die Reaktorgebäudestruktur abgestützt wird.

3. Vorrichtung nach einem der vorhergehenden Ansprüche 1 und 2, wenn das Sekundärmedium flüssiges Natrium ist, dadurch gekennzeichnet, dass ein den Bauelementmantel durchquerendes und im Inneren desselben in das Sekundärnatrium eintauchendes wesentlich senkrechtes Rohr (12) mit einem unter Druck stehenden Inertgas gefüllt ist, um in dem Rohr (12) einen Natriumpegelstand (20) unter dem freien Natriumstand (13) in dem Bauelementmantel bis zu dem Niveau einer in dem Rohr (12) angeordneten Bruchmembran zu gewährleisten, wobei das obere Rohrende über der Bruchmembran (19) hinaus mit einem Mittel verbunden ist zur Abführung der zwischen dem Wasser und dem Sekundärmedium evtl. auftretenden Reaktionssubstanzen bei einem Leck am Dampferzeuger (11).

4. Dampferzeugungsvorrichtung nach Anspruch 2, dadurch gekennzeichnet, dass das Bauelement über einen Teil seiner Höhe oberhalb der Reaktorplatte (32) von einem Doppelmantel umgeben ist, der aus zwei mit Dehnungskompensatoren (24, 26) versehenen Blechringen (23, 25) besteht, die einerseits mit ihrem Unterteil beide an einem an dem Unterteil (7) des Bauelementmantels angebrachten und in Höhe der Platte (32) angeordneten Bauteil (33) befestigt sind, wenn das Bauelement in dem Reaktorbehälter untergebracht ist, und mit ihren Oberteilen an der Reaktorstruktur für den einen, und an dem Bauelement für den anderen montiert sind, wobei das durch ein Leck am Oberteil (10) des Bauelements auftretende Sekundärmedium in dem Raum zwischen den Mantelringen (23, 25) evtl. aufgenommen wird.

5. Wärmeentnahmevorrichtung nach Anspruch 1, dadurch gekennzeichnet, dass die Wärmetauschvorrichtung zwischen dem Primärmedium und dem Sekundärmedium aus einem Satz Rohre (130) besteht, die einen Aussenteil des Mantels bilden und mit dem Innenteil desselben in Verbindung stehen für den Umlauf des Sekundärmediums im Inneren der Rohre (130), deren Aussenfläche mit dem Primärmedium in Kontakt ist, wobei eine im Inneren des Mantels (131) angeordnete Ablenkplatte (133) in diesem eine kreisförmige Umfangszone (132) abgrenzt, die mit den Rohren (130) und einer die Dampferzeuger (136) aufnehmende Mittelzone in Verbindung steht.

6. Wärmeentnahmevorrichtung nach Anspruch 1, dadurch gekennzeichnet, dass die Wärmetauschvorrichtung aus einem Satz Rohre (150) besteht, die an ihren jeweiligen Enden mit dem Innenraum des rohrförmigen Mantels (151) in Verbindung stehen, wobei die einen Aussenteil dieses Mantels bildenden sehr langen Rohre (150) den Umlauf des Sekundärmediums und dessen Erhitzung in ihrem Innenraum gestatten, und wobei die Aussenwand dieser Rohre mit dem Primärmedium in Kontakt ist und die Dampferzeuger (153) in das Sekundärmedium eintauchen, mit dem der rohrförmige Mantel (151) gefüllt ist.

7. Wärmeentnahmevorrichtung nach Anspruch 1, dadurch gekennzeichnet, dass die Leitungsmittel für den Umlauf des Sekundärmediums in dem Mantel aus Ablenkblechen (161, 162, 163) bestehen, die im Innenraum des senkrecht angeordneten sehr langen Bauelementmantels eine kreisförmige Umfangszone in dem unteren Teil des Bauelements abgrenzen, die mit einem rohrförmigen Mittelteil in dem Bauelementunterteil in Verbindung steht, sowie eine rohrförmige Mittelzone in dem Bauelementunterteil, die mit einer kreisförmigen Umfangszone in dem Bauelementoberteil in Verbindung steht, wobei die Wärmetauschvorrichtung (160) zwischen dem Primärmedium und dem Sekundärmedium sowie die Dampferzeuger (166) in den jeweiligen Umfangszonen angeordnet sind.

8. Dampferzeugungsvorrichtung nach einem der Ansprüche 1 bis 7, bei einem integrierten Kernreaktor, dadurch gekennzeichnet, dass die in den Reaktorbehälter eintauchenden Bauelemente (35) zwei symmetrisch zu einem Reaktordurchmesser angeordnete Einheiten bilden, wobei die Reaktorprimärpumpen (36) in der Nähe desselben angeordnet sind.

9. Wärmeentnahmevorrichtung nach einem der Ansprüche 1, 5, 6 und 7, bei einem schnellen Neutronenreaktor mit einem aus mindestens zwei Umlaufsystemen gebildeten Primärkreis für den Kühlmittelumlauf ausserhalb des Behälters, dadurch gekennzeichnet, dass die Bauelemente (178) in das Primärkühlmittel in Zusatzbehälter (171) eingetaucht sind, die an dem jeweiligen Primärkreisumlaufsystem angeschlossen sind und das in Kontakt mit dem Reaktorkern erhitzte Kühlmittel aufnehmen.

10. Wärmeentnahmevorrichtung nach Anspruch 2, dadurch gekennzeichnet, dass der Bauelementunterteil durch Öffnungen, welche die Verschlussplatte des Behälters durchqueren, in diesen eindringen, und dass der über der Platte angeordnete Oberteil dieser Bauelemente Kühlmittel (124, 173) für das Sekundärmedium durch Wärmeaustausch mit der Umgebungsluft über den Bauelementmantel (101) aufweist.

**Claims**

1. Device for producing steam and removing heat from a fast neutron nuclear reactor in which the core is cooled by a liquid constituting the primary fluid contained in the main vessel of the reactor, which device consists of a set of separate and identical components each possessing an outer envelope (1, 7, 10) containing a heat exchange liquid, called the secondary fluid, which is heated by heat exchange with the primary fluid, at least one steam generator (11) immersed in the secondary fluid, into which water is fed so as to be vaporised by the heat from the secondary fluid, and means (5, 6, 8, 9) for channelling the circulation of the secondary fluid inside the envelope (1, 7, 10), between the heat exchange zones between the primary fluid and the secondary fluid, and the heat exchange zones between the secondary fluid and the water, characterised in that each of the components possesses an upper part enclosing the steam generator (11) and located above the level of the primary fluid, and a lower part at least partially immersed in the primary fluid, inside the main vessel of the reactor, and possessing, below the level (60) of the primary fluid, a heat exchange device (1) for heating the secondary fluid, which is circulated by natural convection inside the envelope (1, 7, 10), between the heat exchange device and the steam generator (11).

2. Device for producing steam and removing heat, according to Claim 1, in the case of an integrated-type reactor in which the vessel is closed by a very thick, horizontal slab, characterised in that the outer envelope of each of the components, which has a symmetry of revolution and is very high, is arranged with its axis of symmetry vertical and passes through the slab (32) so that its lower part (7), possessing a nest of tubes (1), is immersed in the primary fluid inside the vessel, and so that its upper part (10), containing the steam generator (11), is arranged above the slab (32) and is supported, independently of the slab (32), by the structure of the reactor building.

3. Device according to either one of Claims 1 and 2, in the case where the secondary fluid is liquid sodium, characterised in that a substantially vertical tube (12), passing through the envelope of the component and immersed in the secondary sodium, inside the envelope, is filled with inert gas under pressure, so as to keep the level (20) of sodium in the tube (12) below the free level (13) of the sodium in the envelope of the component, as far as the level of a bursting diaphragm (19) arranged in the tube (12), the upper end of the tube, beyond the bursting diaphragm (19), being joined to a means for discharging the products resulting from a possible reaction of the water with the secondary fluid, in the event of a leak in the steam generator (11).

4. Device for producing steam, according to Claim 2, characterised in that the component is surrounded, over part of its height above the slab (32) of the reactor, by a double envelope consisting of two shells (23, 25) provided with expansion compensators (24, 26) and fixed in their lower part, in both cases to a piece (33) fixed to the lower part (7) of the envelope of the component and located at the level of the slab (32) when the component is in position in the reactor vessel, and in one case to the structure of the reactor and in the other case to the component, in their upper part, the space between the two shells (23, 25) collecting any secondary fluid which may originate from a leak in the upper part (10) of the component.

5. Removal device according to Claim 1, characterised in that the heat exchange device between the primary fluid and the secondary fluid consists of a set of tubes (130) constituting an outer part of the envelope and in communication with the inner part of the latter, for the circulation of the secondary fluid inside the tubes (130), the outer surface of which is in contact with the primary fluid, a deflecting shield (133), arranged inside the envelope (131), delimiting in the latter an annular peripheral zone (132) communicating with the tubes (130), and a central zone in which the steam generators (136) are arranged.

6. Removal device according to Claim 1, characterised in that the heat exchange device consists of a set of tubes (150) communicating at each of their ends with the internal volume of the envelope (151) of tubular shape, the tubes (150), which are very long and constitute an outer part of this envelope, enabling the secondary fluid to circulate and to be heated in their internal volume, the outer wall of these tubes being in contact with the primary fluid and the steam generators (153) immersed in the secondary fluid filling the tubular envelope (151).

7. Removal device according to Claim 1, characterised in that the means for channelling the circulation of the secondary fluid in the envelope consist of deflectors (161, 162, 163) delimiting, inside the very long, vertically arranged envelope of the component, a peripheral annular zone, in the lower part of the component, communicating with a central tubular part in the lower part of the component, and a central tubular zone, in the lower part of the component, the heat exchange device (160) between the primary fluid and the secondary fluid, and also the steam generators (166), being arranged in each of the peripheral zones respectively.

8. Device for producing steam, according to any one of Claims 1 to 7, in the case of an integrated-tyne nuclear reactor, characterised in that the components (35) immersed in the reactor vessel form two sets arranged symmetrically relative to a diameter of the reactor, in the region of which the primary pumps of the reactor (36) are located.

9. Device for removing heat, according to any one of Claims 1, 5, 6 and 7, in the case of a fast neutron nuclear reactor possessing a primary circuit for circulation of the cooling liquid outside the vessel, formed of at least two loops, characterised in that the components (178) are immersed in the primary cooling liquid, inside auxiliary vessels (171) located on each of the loops of the primary circuit and receiving the cooling liquid which has been heated in contact with the reactor core.

10. Device for removing heat, according to Claim 2, characterised in that the lower part of the component enters the vessel via openings passing through the slab closing the vessel, and in that the upper part of these components, located above the slab, possesses cooling means (124, 173) for the secondary fluid, via heat exchange with the atmosphere, through the envelope (101) of the component.

0 064 920

Fig 1

Fig 2

Fig 3

Fig 4

Fig 5

Fig 6

Fig 7